# EUROPEAN PATENT SPECIFICATION

(11) **EP 3 647 274 B1**
(45) Date of publication and mention of the grant of the patent: **26.03.2025**
(21) Application number: 19205920.2
(22) Date of filing: 29.10.2019
(51) Int. Cl.: C02F 1/42

(54) **FLUID PURIFICATION DEVICE**
FLUIDREINIGUNGSVORRICHTUNG
DISPOSITIF DE PURIFICATION DE FLUIDES

(30) Priority: 01.11.2018 US 201816177862
(43) Date of publication of application: 06.05.2020
(73) Proprietor: Unger Marketing International, LLC, Bridgeport CT 06610 (US)
(72) Inventor: PATTERSON, Joseph K., Monroe, CT 06468 (US); BUCKLEY, James, New Hartford, CT 06057 (US); SMITH, Robert F., Waterbury, CT 06706 (US); ADAMS, Paul H., Monroe, CT 06468 (US)
(74) Representative: Müller Schupfner & Partner Patent- und Rechtsanwaltspartnerschaft mbB (Muc)

(56) References cited:
- WO-A2-2005/115924
- US-A1- 2008 296 210

## Description

### BACKGROUND OF THE DISCLOSURE

**The** subject matter disclosed herein relates to a fluid purification device, and in particular to a fluid purification device having a replaceable media module.

It is desirable to use purified water (referred to herein as "pure water") in various cleaning applications. One common cleaning application for pure water is the cleaning of windows, cars, buildings, solar panels, and other surfaces. For example, the use of pure water in the form of deionized (DI) water, also known as demineralized (DM) water, has been found to be effective when cleaning smooth or reflective surfaces such as automobiles. The pure water can reduce the formation water marks and spots, which can be formed by impurities in untreated water that remain on the surface when the water dries.

Many pure water systems use one or more types of purification media either alone or in combination with other devices/processes such as, but not limited to, particle filtration, distilling (i.e., distilled water), reverse osmosis, desalination, carbon filtration, microfiltration, ultrafiltration, ultraviolet oxidation, electrodialysis, nanofilteration, others, and any combinations thereof. WO 2005 115924 A2 discloses a filter housing having radial sealing means. Upper bosses and lower bosses can be used to attach the head to the sump for easy opening and closing the filter housing when replacing the filter cartridge.

Some pure water systems improve the ease of replacing depleted or spent purification media by providing media purification devices that contain or house the purification media. Still further pure water systems condition the water by adding to or removing one or more components from the input water.

Accordingly, while existing water conditioning systems are suitable for their intended purposes the need for improvement remains, particularly in providing a fluid purification system having the features described herein.

### BRIEF DESCRIPTION OF THE DISCLOSURE

The invention is set out in the appended set of claims. According to one aspect of the disclosure a fluid purification device is provided. The device includes a tank having a hollow interior and a lock feature. A cover is sealingly coupled to the tank. A release assembly is pivotally coupled to the cover and engaged with the lock feature, the release assembly having a relief valve fluidly coupled to the hollow interior and a lock member, the release assembly being rotatable between a first position and a second position, wherein the relief valve is in a closed position and the lock member is engaged with the lock feature in the first position, and wherein the relief valve is open and the lock member rotates away from and is disengaged from the lock feature in the second position.

Additionally or alternatively, in this or other embodiments the relief valve opens and the lock member disengages simultaneously when the release assembly rotates from the first position to the second position. Additionally or alternatively, in this or other embodiments the lock feature is a rib on an exterior surface of the tank and the cover includes a slot on an inner surface. Additionally or alternatively, in this or other embodiments the release assembly further includes a lever coupled between the lock member and the relief valve, the lever having a portion operably coupled to the relief valve.

Additionally or alternatively, in this or other embodiments the lock member includes an arm having a first projection extending therefrom, the first projection having a slot sized to receive the lock feature. Additionally or alternatively, in this or other embodiments the lock feature is a second projection extending from the side of the tank. Additionally or alternatively, in this or other embodiments the first projection includes at least one angled surface.

Additionally or alternatively, in this or other embodiments the relief valve includes a biasing member arranged to bias the release assembly into the first position. Additionally or alternatively, in this or other embodiments the relief valve includes a cap coupled to a valve body, the biasing member being disposed between the cap and the cover, the valve body extending through the cover and having a head that selectively seals with the cover.

According to another aspect of the disclosure a fluid purification system is provided. The system includes a tank having a first port and a hollow interior. A purification device is disposed at least partially within the hollow interior. A cover is sealingly coupled to the tank, the cover assembly having a second port fluidly coupled to the purification device. A release assembly is coupled to the cover, the release assembly having a relief valve fluidly coupled to the hollow interior and a lock member, the release assembly being rotatable between a first position and a second position, wherein the relief valve is in a closed position and the lock member is coupled to the tank in the first position, and wherein the relief valve is open and the lock member rotates away from and is disengaged from the tank in the second position

Additionally or alternatively, in this or other embodiments the relief valve opens and the lock member disengages simultaneously when the release assembly rotates from the first position to the second position. Additionally or alternatively, in this or other embodiments the tank includes a lock feature on an exterior surface of the tank. Additionally or alternatively, in this or other embodiments the release assembly further includes a lever coupled between the lock member and the relief valve, the lever having a portion operably coupled to the relief valve. Additionally or alternatively, in this or other embodiments the lock member includes an arm having a first projection extending therefrom, the first projection having a slot sized to receive the lock feature.

Additionally or alternatively, in this or other embodiments the lock feature is a second projection extending from the side of the tank. Additionally or alternatively, in this or other embodiments the first projection includes at least one angled surface. Additionally or alternatively, in this or other embodiments the relief valve includes a biasing member arranged to bias the release assembly into the first position. Additionally or alternatively, in this or other embodiments the relief valve includes a cap coupled to a valve body, the biasing member being disposed between the cap and the cover, the valve body extending through the cover and having a head that selectively seals with the cover.

These and other advantages and features will become more apparent from the following description taken in conjunction with the drawings.

### BRIEF DESCRIPTION OF DRAWINGS

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 is a perspective view of a fluid purification device according to an embodiment;
FIG. 2 is another perspective view of the fluid purification device of FIG. 1;
FIG. 3 is a top view of the fluid purification device of FIG. 1;
FIG. 4 is a perspective unassembled view of the fluid purification device of FIG. 1;
FIG. 5 is a partial perspective view of a tank portion of the fluid purification device of FIG. 1;
FIG. 6 is a bottom perspective view of a cover assembly of the fluid purification device of FIG. 1;
FIG. 7 is a partial perspective view of a release and lock assembly of the fluid purification device of FIG. 1;
FIG. 8 is a perspective view of the release and lock assembly of FIG. 7;
FIG. 9 is a partial perspective sectional view taken along the line A-A of FIG. 3;
FIG. 10 is a partial side sectional view taken along the line A-A of FIG. 3 with the release and lock assembly in the closed or locked position;
FIG. 11 is a partial side sectional view taken along the line A-A of FIG. 3 with the release and lock assembly in the open or unlocked position; and

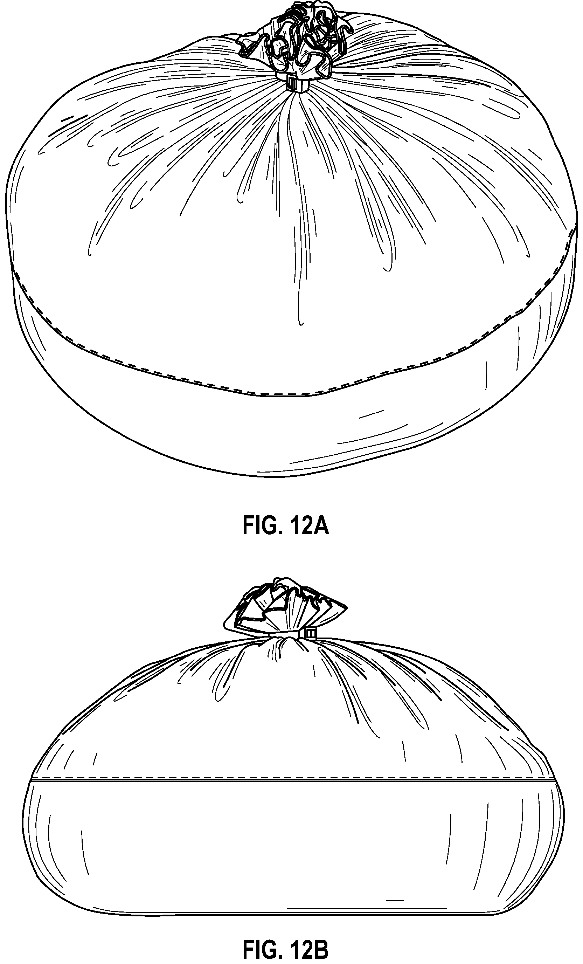

FIG. 12A and FIG. 12B are perspective and side illustrations of the media module of FIG. 4 in a free or resting state.

The detailed description explains embodiments of the disclosure, together with advantages and features, by way of example with reference to the drawings.

### DETAILED DESCRIPTION OF THE DISCLOSURE

Embodiments of the present disclosure are directed to a fluid purification system such as that used to condition or generate pure water. Embodiments provide technical effect in a release and lock assembly that simultaneously release pressure from an interior of the system and unlock a cover assembly.

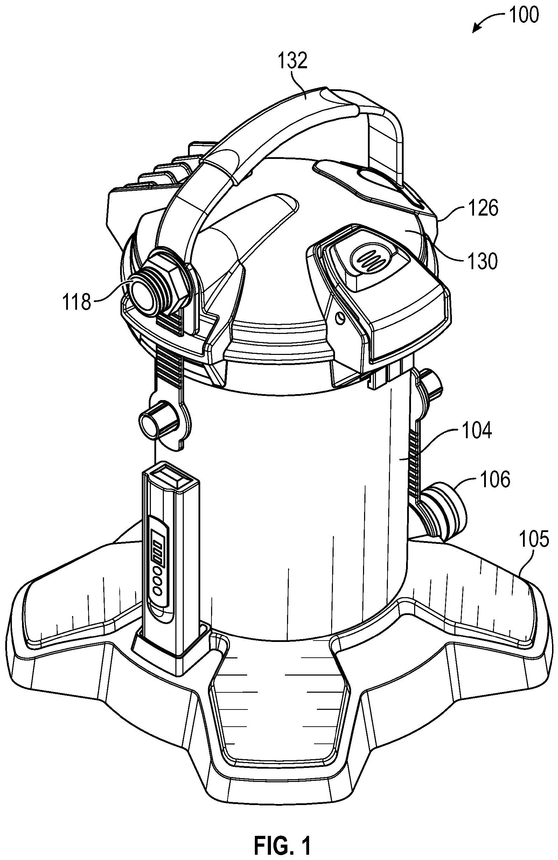

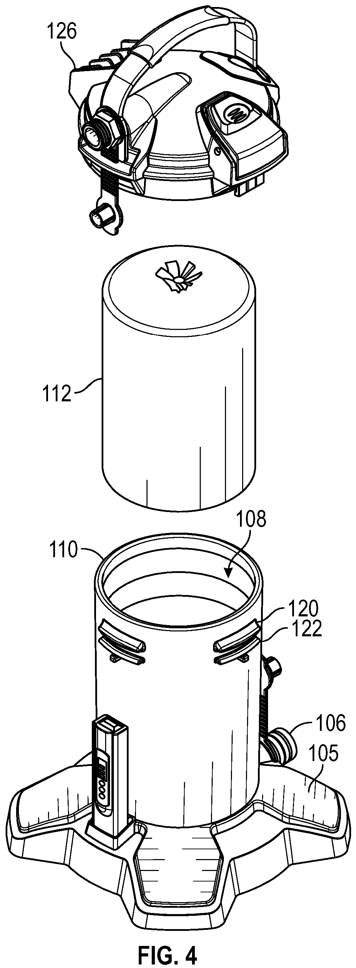

Referring now to FIG. 1, an embodiment is shown of a fluid purification system 100. It should be appreciated that while the illustrated embodiment may refer to the fluid purification system 100 as generating pure water for use in cleaning applications, this is for exemplary purposes and the claims should not be so limited in other embodiments, the fluid purification system 100 may be used in other applications, such as for conditioning water for using in washing vehicles. The system 100 includes a base 102 that holds and supports a tank 104. The tank 104 includes an inlet port 106 and a hollow interior 108 (Fig 4). The tank 104 includes an open end 110 (Fig 4).

The hollow interior 108 includes an inner surface having a diameter sized to receive a replaceable media module 112. The media module includes a purification media 200 that is under compression when the module is inserted into the hollow interior 108. It should be appreciated that while embodiments herein describe the hollow interior 108 as being circular, this is for exemplary purposes and the claims should not be so limited. In one or more embodiments described herein, the interior 108 may be any suitable shape, such as but not limited to square, rectangular, oval, or a polygon for example.

It should be appreciated that while embodiments herein may describe the port 106 as being an "inlet" and the port 118 as being the "outlet," this is for example purposes and the claims should not be so limited. In other embodiments, the flow of fluid may be reversed, with the port 118 being the "inlet" and the port 106 being the "outlet."

In an embodiment, the module 112 includes an initial volume of purification media. As the system 100 is operated, such as to generate pure water for example, the water will pass through the media to become purified. As used herein, the terms "pure", "purified", and "purification" includes the removal of one or more components and/or the addition of one or more components from water or any other fluid. The components removed or added can include soluble and/or insoluble materials such as, but not limited to minerals, salts, suspended particles, bacteria, and others, where the soluble components are often referred to as total dissolved solids or TDS.

During operation, the purification of the fluid will cause the purification media to gradually deplete. As the purification media depletes, it also reduces in volume. As used herein, the term "depleted volume" means an operating condition where the output water (e.g. at the outlet port 118) has a TDS level that is substantially the same as the input water. It has been found that the depleted volume is about 10-20% less than the initial volume. Therefore, in the illustrated embodiment, the initial volume of purification media is selected to allow a 20% reduction in volume and still be under compression when at the depleted volume.

In an embodiment, the purification media is contained by a member made from a thin porous, flexible, and/or elastic material. In an embodiment, at least one of the material is both porous and elastic. In other embodiments, at least one of the material is both porous and flexible. In some such embodiments, member may be formed from a material that has 5%-25% elastane and 75%-95% Nylon, preferably a material formed from between 10%-20 elastane and between 80%-90% Nylon, or with 15% elastane and 85% Nylon being desired, and any subranges therebetween. In one embodiment, the flexible bag may be 100% nylon or polyamide (PA).

In the illustrated embodiment, the replaceable media module 112 is tubular in shape after inserted into the tank 104. It should be appreciated that due to the elastic properties of the first member 202, the module 112 may have a bulbous shape when placed on a surface outside of the tank 104. In other embodiments where the module 112 has a member that is flexible, but has relative low elasticity, the module 112 may have relatively straight sides (e.g. non-bulbous) when placed on a surface outside of the tank 104. In some embodiments where module 112 is configured for use with the tank 104, which has an internal diameter of 130 mm, the module 112 may have an outer diameter of between 100 mm and 300 mm, or between about 140 mm to 250 mm, and any subranges therebetween. In this manner, the module 112 has outer diameter that is within ±20%, or within -10% to 0%, with about -4% of the inner diameter of the hollow interior 108 being desired, and any subranges therebetween.

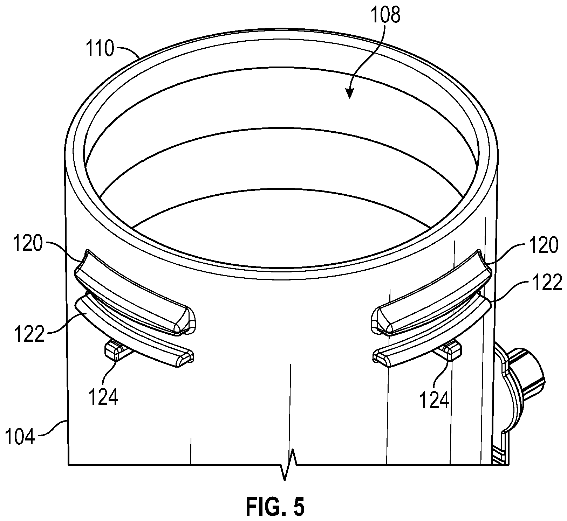

The tank includes a plurality of radial pins or ribs 120, 122 (FIG. 5), with the first plurality of ribs 120 being closer to the open end 110. The second plurality of ribs 122 includes a projection 124 that extends radially outward from each rib 122. In the illustrated embodiment, the projection 124 is centrally located on each rib 122. As will be discussed in more detail herein, the ribs 120, 122 are sized and positioned to engage slots within a cover assembly 126. Further, it should be appreciated that while the illustrated embodiment shows the ribs 120, 122 as being positioned on the outer diameter of the tank 104, in other embodiments the ribs 120, 122 may be positioned on the inside diameter of the tank 104. Further in other embodiments, the tank 104 includes slots and the cover assembly 126 includes corresponding ribs.

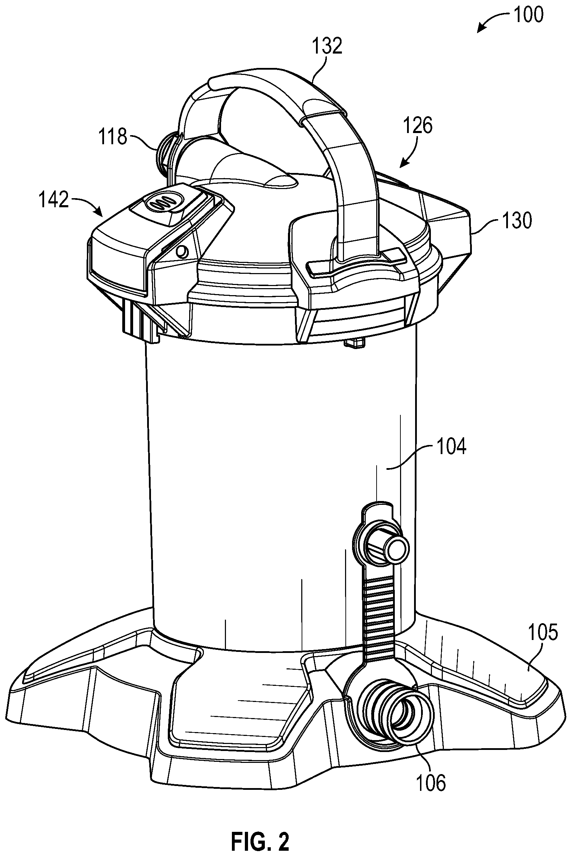

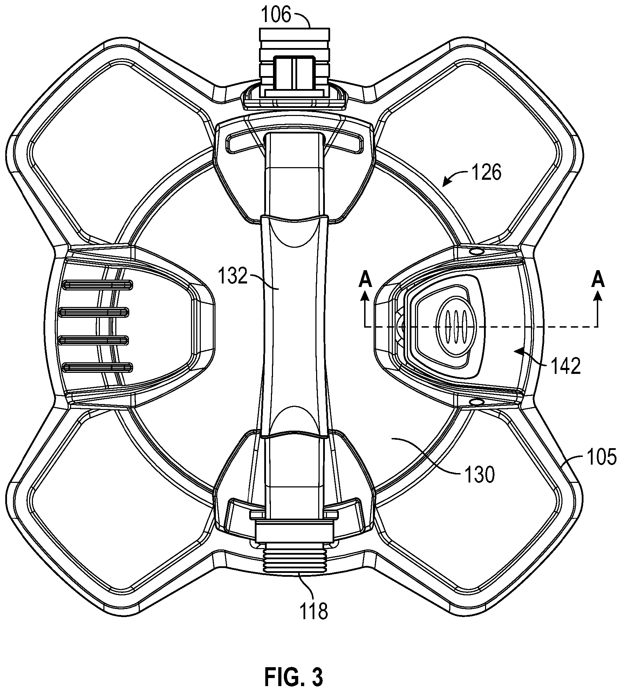

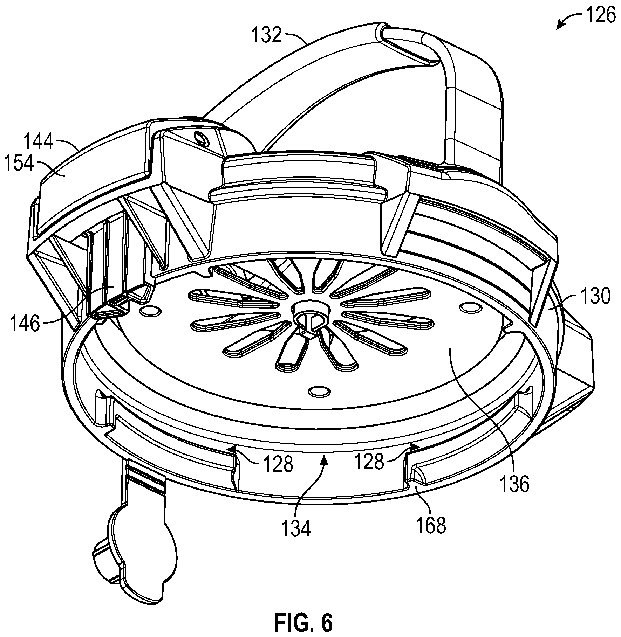

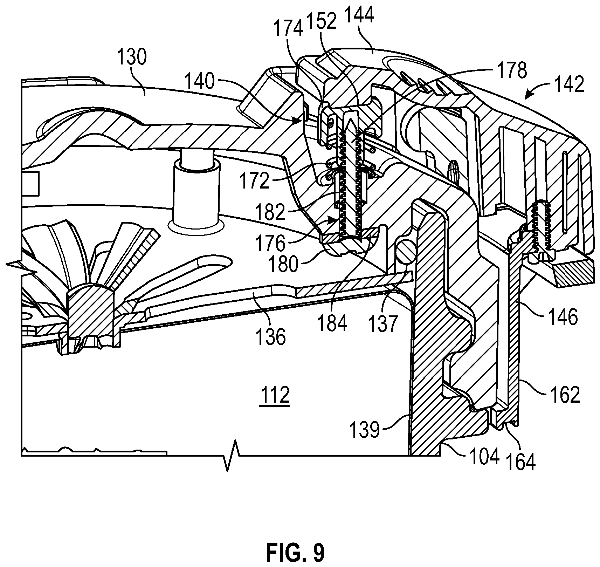

Referring now to FIGS. 1-6, the cover assembly 126 is shown. The cover assembly 126 is sized to cover and seal against the tank 104 when the ribs 120, 122 engage the slots 128 (FIG. 6) with an o-ring 137 (FIG. 9). The cover assembly 126 includes a body 130 with a handle 132 coupled thereto. The body 130 includes a hollow interior portion 134 that is in fluidly communication with the hollow interior 108 of the tank 104. In an embodiment, a diffuser element 136 may be coupled to the body 130. A port 118 is in fluid communication with the hollow interior 108. The port 118 may be an outlet port that transfers conditioned water from the system 100 to the end use application.

According to the invention, the cover assembly 126 includes the slots 128 formed on the inside diameter of the hollow interior portion 134. When the cover assembly 126 is placed on the tank 104 and rotated with respect to each other about the longitudinal axis of the system 100, the ribs 120 are received in the slots 128 so as to form a fluid seal between the tank 104 and the cover assembly 126.

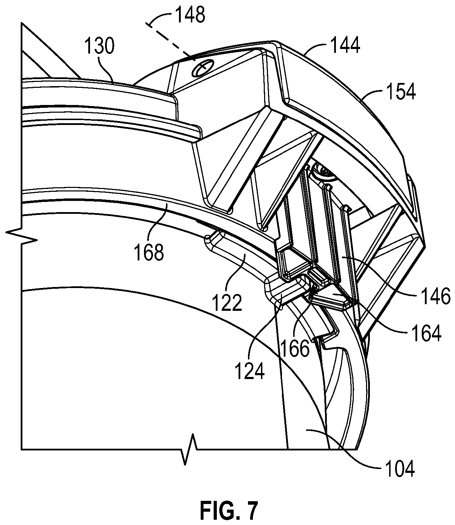

Referring now to FIGS. 7-11, the cover assembly 126 further includes a pressure relief valve 140 and a release assembly 142. The release assembly 142 includes a lever 144 and a locking member 146. In the illustrated embodiment, the lever 144 and locking member 146 are two separate components that are fixedly coupled to each other. It should be appreciated that in other embodiments, the lever 144 and locking member 146 may be fabricated as a single component. The release assembly 142 is pivotally coupled to the body 130 about an axis 148.

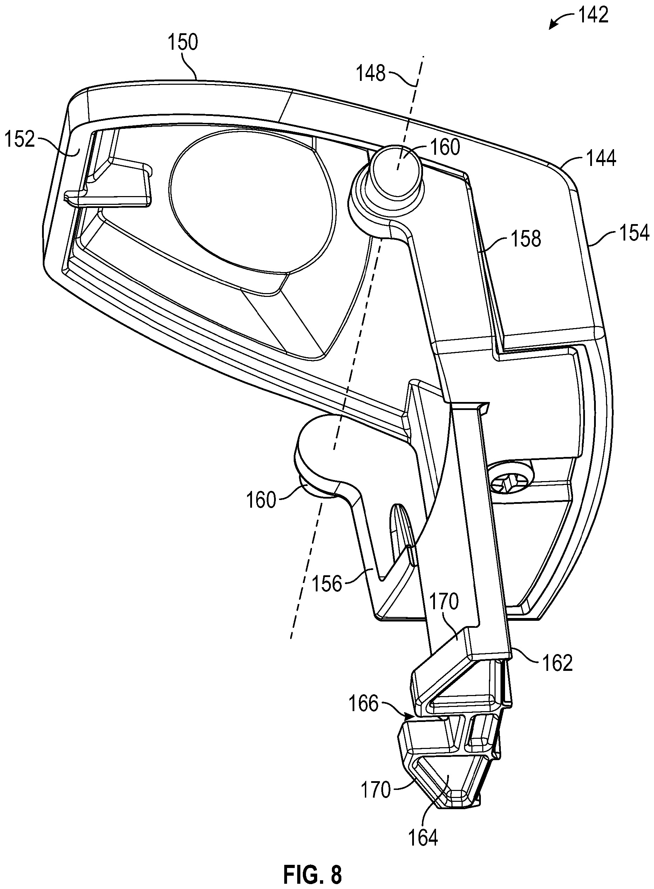

The lever 144 includes a portion 150 that extends over the top of the body 130. As will be discussed in more detail herein, an end 152 of the portion 150 engages and actuates the relief valve 140. The lever 144 further includes a second portion 154 that extends along the side of the body 130. In the illustrated embodiment, the lock member 146 couples to the second portion 154. In an embodiment, the lock member 146 includes a first arm 156 and a second arm 158 (FIG.8). The arms 156, 158 each include a trunnion 160. The trunnions 160 engage recesses in the body 130 to define the axis 148. Extending along and extending past the side of the body 130 is a locking arm 162. According to the present invention, the locking arm 162 includes a projection 164 on a distal end andthe projection 164 extends generally perpendicular to the locking arm 162 and includes a slot 166 that is sized to receive the projection 124 (FIG. 5). In the illustrated embodiment, the locking arm 162 is sized to extend past the bottom edge 168 (FIG.7) of the body 160.

When the cover assembly 126 is placed on the tank 104 and rotated to engage the rib 120 into the slot 128, the angled surface 170 will contact the projection 122 causing the release assembly 142 to rotate about the axis 148 according to the invention such that the projection 164 slides over the end of the projection 124 until the slot 166 aligns with the projection 124. When the slot 166 aligns with the projection 124, the release assembly 142 will rotate back under the influence of biasing member 172 (FIG. 9) causing the projection 124 to enter and engage the slot 166. It should be appreciated that the engagement of the projection 124 and the slot 166 prevents further rotation of the cover assembly 126. Since the ribs 120, 122 are engaged with the slot 128, the cover assembly 126 is coupled in sealing relationship with the tank 104 due to the mechanical coupling of the ribs 120, 122 with the slot 128 and the engagement of the o-ring 137 with the side wall 139 (FIG. 9) of tank 104 forms a pressure seal..

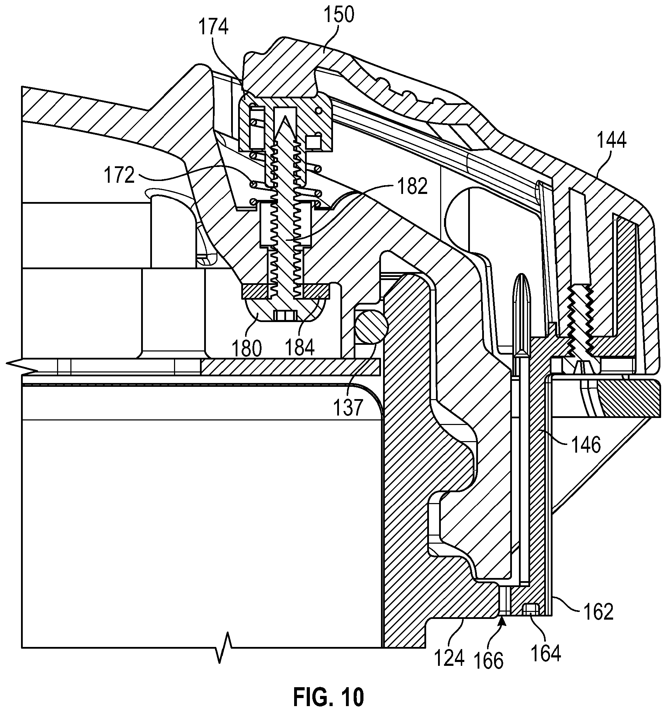

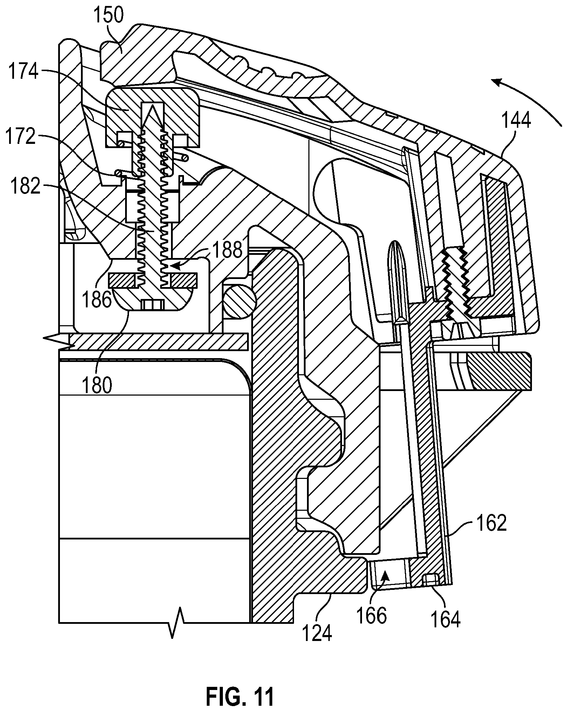

The relief valve 140 includes a cap 174 that is disposed between the biasing member 172 and the end 152. Coupled to the cap 174 is a valve body 176 having a stem 178 and a head 180. In the illustrated embodiment, the stem 178 includes a thread that couples to an opening in the cap 174. In other embodiments, the stem 178 is coupled to the cap 174 via other fastening means, such as but not limited to a press fit or an adhesive for example. The stem 178 extends through an opening 182 in the body 130 to secure the relief valve to the cover assembly. In an embodiment, a seal member 184 is disposed between the head 180 and a surface 186 (FIG. 11) of the body 130. In one embodiment, the seal member 184 is coupled to the surface 186. In the illustrated embodiment, the seal member 184 is coupled to the head 180. The seal member 184 provides a seal between the head 184 and the body 130 when the relief valve 140 is in the closed position (FIG. 9, FIG. 10).

In operation, the operator couples the cover assembly 126 to the tank 104 as described above. A fluid source is coupled to one of the ports 106, 118 and an outlet conduit is coupled to the other of the ports 106, 118. The system 100 then operates by receiving fluid (e.g. water) from the input port, conditions the fluid by passing it through the purification media in module 112 and then providing the conditioned fluid to the outlet port. It should be appreciated that the operation of the system 100 pressurizes the interior volume of the system 100. This internal pressure increases the engagement force of the rib 120 on the slot 128. As a result, when the operator has finished using the system 100, the cover assembly 126 will be difficult or impossible to remove due to the internal pressure.

To resolve this, when the operator desires to remove the cover assembly 126, the operator press the portion 150 of the lever 144. The depression of the portion 150 causes two actions to occur simultaneously as is shown in FIG. 11. First, the depression of the portion 150 overcomes the biasing force of the biasing member 172 via the cap 174, resulting in the valve body 176 translating in a direction towards the base 105. This displaces the head 180 from the surface 186 generating a gap 188 allowing pressure within the interior volume of the system 100 to vent via the hole 182. Second, the depression of the portion 150 rotates the release assembly 142 (in the counter-clockwise direction when viewed from the position of FIG.11). This rotation moves the locking arm 162 and the projection 164 away from the side wall of the tank 104 to disengage the projection 124 from the slot 166. With the slot 166 disengaged from the projection 124, the cover assembly 126 may be rotated until the rib 120 disengages from the slot 128 allowing the cover assembly 126 to be lifted off of the tank 104.

Embodiments provided herein provide for a fluid conditioning system having a pressure relief arrangement. Embodiments provided herein further provide for a fluid conditioning system having a lock that couples a cover assembly to a tank. Still further embodiments provided herein further provide for a release assembly that simultaneously releases pressure from an internal volume and unlocks the cover assembly from the tank.

It should further be appreciated that while embodiments herein may refer to features with respect to an embodiment, this is for example purposes and it is contemplated that the features may be combined with other disclosed embodiments.

The term "about" is intended to include the degree of error associated with measurement of the particular quantity based upon the equipment available at the time of filing the application. For example, "substantially" or "about" can include a range around a given value.

It should also be noted that the terms "first", "second", "third", "upper", "lower", and the like may be used herein to modify various elements. These modifiers do not imply a spatial, sequential, or hierarchical order to the modified elements unless specifically stated.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the disclosure is provided in detail in connection with only a limited number of embodiments, it should be readily understood that the disclosure is not limited to such disclosed embodiments. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. A fluid purification device (100) comprising:
a tank (104) having a hollow interior (108) and a lock feature (124), which is a second protrusion extending from the side of the tank (104);
a cover (126) sealingly coupled to the tank (104), the cover including a body (130), which includes a hollow interior portion (134) that is in fluidly communication with the hollow interior (108) of the tank (104); and
a release assembly (142) pivotally coupled to the cover (126) and engaged with the lock feature, the release assembly (142) having a relief valve (140) fluidly coupled to the hollow interior and a lock member (146), the release assembly (142) being rotatable between a first position and a second position,
wherein the relief valve (140) is in a closed position and the lock member (146) is engaged with the lock feature (124) in the first position, and wherein the relief valve (140) is open and the lock member (146) rotates away from and is disengaged from the lock feature (124) in the second position, **characterized in that** the tank (104) comprises ribs (120) and the cover (126) comprises slots (128), formed on the inside diameter of the hollow interior portion (134), wherein the release assembly (142) comprises a locking arm (162) extending along and extending past the side of the body (130), which includes a a first projection (164) at the distal end that extends perpendicular to the locking arm (162) end and includes a slot (166) sized to receive the second projection (124), wherein the cover (126) is configured such that an angled surface (170) of the first projection (164) of the locking arm (162) will contact the second projection (124) causing the release assembly (142) to rotate about an axis (148) such that the first projection (164) of the locking arm (162) slides over the end of the second projection (124) of the tank until the slot (166) aligns with the projection (124), which is intended to be received in the slot (166), when the cover (126) is placed on the tank (104) and rotated to engage the rib (120) into the slot (128).

2. The device (100) of claim 1, wherein the relief valve (140) opens and the lock member (146) disengages simultaneously when the release assembly (142) rotates from the first position to the second position.

3. The device (100) of claim 1, wherein the release assembly (142) further includes a lever (144) coupled between the lock member (146) and the relief valve (140), the lever (144) having a portion operably coupled to the relief valve (140).

4. The device (100) of claim 1, wherein the relief valve (140) includes a biasing member (172) arranged to bias the release assembly (142) into the first position.

5. The device (100) of claim 4, wherein the relief valve (140) includes a cap (174) coupled to a valve body (176), the biasing member (172) being disposed between the cap (174) and the cover (126), the valve body (176) extending through the cover (126) and having a head (180) that selectively seals with the cover (126).

6. The device (100) of claim 1, further comprising a purification device disposed at least partially within the hollow interior.

## Patentansprüche

1. Vorrichtung (100) zur Klärung von Flüssigkeiten, umfassend:
einen Behälter (104) mit einem hohlen Innenraum (108) und einem Verschluss (124), welcher ein zweiter Vorsprung ist, der sich von der Seite des Behälters (104) erstreckt;
eine Abdeckung (126), die dichtend mit dem Behälter (104) verbunden ist, wobei die Abdeckung einen Körper (130) umfasst, welcher einen hohlen Innenabschnitt (134) aufweist, der in Fluidverbindung mit dem hohlen Innenraum (108) des Behälters (104) steht; und
eine Freisetzungsvorrichtung (142), die schwenkbar mit der Abdeckung (126) verbunden ist und mit dem Verschluss in Eingriff steht, wobei die Freisetzungsvorrichtung (142) ein Überdruckventil (14) aufweist, das fluidisch mit dem hohlen Innenraum und einem Verschlusselement (146) gekoppelt ist, wobei die Freisetzungsvorrichtung (142) zwischen einer ersten Position und einer zweiten Position drehbar ist, wobei in einer ersten Position das Überdruckventil (140) sich in einer geschlossenen Position befindet und das Verschlusselement (146) mit dem Verschluss (124) eingreift und wobei in der zweiten Position das Überdruckventil (140) geöffnet ist und das Verschlusselement (146) sich von dem Verschluss (124) wegdreht und von dem Verschluss (124) gelöst ist, **dadurch gekennzeichnet, dass** der Behälter (104) Rippenvorsprünge (120) umfasst und die Abdeckung (126) Schlitze (128) umfasst, die an dem Innendurchmesser angeordnet sind, wobei die Freisetzungsvorrichtung (142) einen Verriegelungsarm (162) umfasst, der sich entlang der Seite des Körpers (130) erstreckt und über diese hinausragt, wobei der Verriegelungsarm (162) einen ersten Vorsprung (164) an dem distalen Ende aufweist, das sich senkrecht zum Ende des Verriegelungsarms (162) erstreckt, und einen Schlitz (166) aufweist, der so bemessen ist, um den zweiten Vorsprung (124) aufzunehmen, wobei die Abdeckung (126) dazu ausgestaltet ist, dass eine abgewinkelte Oberfläche (170) des ersten Vorsprungs (164) des Verriegelungsarms (162) den zweiten Vorsprung (124) berührt, wodurch die Freisetzungsvorrichtung (142) um eine Achse (148) gedreht wird, so dass der erste Vorsprung (164) des Verriegelungsarms (162) über das Ende des zweiten Vorsprungs (124) des Behälters gleitet, bis der Schlitz (166) mit dem Vorsprung (124) ausgerichtet ist, der in dem Schlitz (166) aufgenommen werden soll, wenn die Abdeckung (126) auf dem Behälter (104) angeordnet und gedreht wird, um den Rippenvorsprung (120) in den Schlitz (128) einzuführen.

2. Vorrichtung (100) gemäß Anspruch 1, wobei sich das Überdruckventil (140) öffnet und das Verschlusselement (146) gleichzeitig entriegelt, wenn sich die Freisetzungsvorrichtung (142) von der ersten Position in die zweite Position dreht.

3. Vorrichtung (100) gemäß Anspruch 1, wobei die Freisetzungsvorrichtung(142) ferner einen Hebel (144) aufweist, der zwischen dem Verschlusselement (146) und dem Überdruckventil (140) angebunden ist, wobei der Hebel (144) einen Abschnitt aufweist, der mit dem Überdruckventil (140) verbunden ist.

4. Vorrichtung (100) gemäß Anspruch 1, wobei das Überdruckventil (140) ein Vorspannelement (172) aufweist, das so angeordnet ist, um die Freisetzungsvorrichtung (142) in die erste Position vorzuspannen.

5. Vorrichtung (100) gemäß Anspruch 4, wobei das Überdruckventil (140) eine Kappe (174) aufweist, die mit einem Ventilkörper (176) verbunden ist, wobei das Vorspannelement (172) zwischen der Abdeckung (174) und der Abdeckung (126) angeordnet ist, wobei sich der Ventilkörper (176) durch die Abdeckung (126) erstreckt und einen Ventilkopf (180) aufweist, der selektiv mit der Abdeckung (126) abdichtet.

6. Vorrichtung (100) gemäß Anspruch 1, die ferner eine Klärungsvorrichtung umfasst, die zumindest teilweise innerhalb des hohlen Innenraums angeordnet ist.

## Revendications

1. Dispositif de purification de fluides (100) comprenant :
un réservoir (104) ayant un intérieur creux (108) et une caractéristique de verrouillage (124) qui est une deuxième protubérance s'étendant sur le côté du réservoir (104) ;
un couvercle (126) couplé de manière étanche au réservoir (104), le couvercle comprenant un corps (130) qui comprend une partie intérieure creuse (134) qui est en communication fluidique avec l'intérieur creux (108) du réservoir (104) ; et
un ensemble de libération (142) couplé de manière pivotante au couvercle (126) et étant en prise avec la caractéristique de verrouillage, l'ensemble de libération (142) présentant une soupape de décharge (140) couplée de manière fluidique à l'intérieur creux et un élément de verrouillage (146), l'ensemble de libération (142) étant rotatif entre une première position et une deuxième position,
dans lequel
la soupape de décharge (140) est en position fermée et l'élément de verrouillage (146) est en prise avec la caractéristique de verrouillage (124) dans la première position, et
la soupape de décharge (140) est ouverte et l'élément de verrouillage (146) tourne à l'écart de la caractéristique de verrouillage (124) et en est désengagé dans la deuxième position,
**caractérisé en ce que** le réservoir (104) comprend des nervures (120) et le couvercle (126) comprend des fentes (128), formées sur le diamètre intérieur de la partie intérieure creuse (134), l'ensemble de libération (142) comprenant un bras de verrouillage (162) s'étendant le long et au-delà du côté du corps (130) qui comprend une première saillie (164) à l'extrémité distale qui s'étend perpendiculairement à l'extrémité du bras de verrouillage (162) et présente une fente (166) dimensionnée pour recevoir la deuxième saillie (124), le couvercle (126) étant configuré de telle sorte qu'une surface angulaire (170) de la première saillie (164) du bras de verrouillage (162) entre en contact avec la deuxième saillie (124), ce qui entraîne la rotation de l'ensemble de libération (142) autour d'un axe (148), de telle sorte que la première saillie (164) du bras de verrouillage (162) glisse sur l'extrémité de la deuxième saillie (124) du réservoir jusqu'à ce que la fente (166) s'aligne avec la saillie (124) destinée à être reçue dans la fente (166), lorsque le couvercle (126) est placé sur le réservoir (104) et est tourné pour engager la nervure (120) dans la fente (128).

2. Dispositif (100) selon la revendication 1,
dans lequel la soupape de décharge (140) s'ouvre et l'élément de verrouillage (146) se désengage simultanément lorsque l'ensemble de libération (142) tourne de la première position à la deuxième position.

3. Dispositif (100) selon la revendication 1,
dans lequel l'ensemble de libération (142) comprend en outre un levier (144) couplé entre l'élément de verrouillage (146) et la soupape de décharge (140), le levier (144) ayant une partie couplée de manière opérationnelle à la soupape de décharge (140).

4. Dispositif (100) selon la revendication 1,
dans lequel la soupape de décharge (140) comprend un élément de sollicitation (172) conçu pour solliciter l'ensemble de libération (142) vers la première position.

5. Dispositif (100) selon la revendication 4,
dans lequel la soupape de décharge (140) comprend un capuchon (174) couplé à un corps de soupape (176), l'élément de sollicitation (172) étant disposé entre le capuchon (174) et le couvercle (126), le corps de soupape (176) s'étendant à travers le couvercle (126) et ayant une tête (180) qui assure sélectivement une étanchéité avec le couvercle (126).

6. Dispositif (100) selon la revendication 1, comprenant en outre un dispositif de purification disposé au moins partiellement dans l'intérieur creux.
